# EUROPÄISCHE PATENTSCHRIFT

(11) **EP 1 583 915 B1**
(45) Veröffentlichungstag und Bekanntmachung des Hinweises auf die Patenterteilung: **04.10.2006**
(21) Anmeldenummer: 03815063.7
(22) Anmeldetag: 19.12.2003
(51) Int. Cl.: F16H 29/18

(54) **STUFENLOS REGELBARES GETRIEBE**
CONTINUOUSLY ADJUSTABLE GEAR SYSTEM
ENGRENAGE A ACTION PROGRESSIVE

(30) Priorität: 16.01.2003 DE 10301348
(43) Veröffentlichungstag der Anmeldung: 12.10.2005
(73) Patentinhaber: Satellite Gear Systems Ltd., Dublin 6 (IE)
(72) Erfinder: FISCHER, Herwig, PL-61-960 Poznan (PL)
(74) Vertreter: Vomberg, Friedhelm
(86) Internationale Anmeldenummer: PCT/EP2003/014628
(87) Internationale Veröffentlichungsnummer: WO 2004/063597

(56) Entgegenhaltungen:
- DE-A- 10 100 374
- DE-A- 19 953 643
- GB-A- 482 361

## Beschreibung

Die Erfindung betrifft ein stufenlos regelbares Getriebe mit einer Formschlusselemente, vorzugsweise eine Verzahnung, sowie eine Umfangsnut aufweisenden Ringscheibe und einer hierzu in beliebige konzentrische oder exzentrische Lagen verschiebbare Sternscheibe mit Radialführungen, und mit mindestens zwei Kupplungselementen, die einerseits in der Umfangsnut geführt werden und die zu den Formschlusselementen komplementär ausgebildete Formschlusselemente aufweisen und die andererseits einen axial hervorstehenden, in einer der vorgesehenen Radialführungen der Sternscheibe bewegbaren Übertragungsstift aufweisen, wobei jedes Kupplungselement bei seiner zirkularen Bewegung in der Umfangsnut der Ringscheibe einen sich über einen bestimmten Teilkreisbogen erstreckenden Lastweg, in dem das Kupplungselement mit den Formschlusselementen der Ringscheibe im Eingriff steht, und den verbleibenden Teilkreisbogen als Leerbogen durchläuft, in dem der Formschlusseingriff gelöst (entkuppelt) ist, und wobei durch Variation der exzentrischen Lage der Ringscheibe und der Sternscheibe das Übersetzungsverhältnis veränderbar ist.

Ein solches Getriebe wird beispielsweise in der DE 199 53 643 A1 dargestellt und beschrieben.

Aus Dokument DE 19953643, das den nächstliegenden Stand der Technik repräsentiert, ist ein Getriebe mit den Merkmalen der Oberbegriffs des Anspruchs 1 bekannt.

Nach der EP 0 708 896 B1 ist ein stufenlos oder quasi stufenlos verstellbares formschlüssiges Satellitengetriebe bekannt, das ein Antriebs- und ein Abtriebselement sowie mehrere einzelne Räder besitzt, die gemeinsam ein Satellitenrad darstellen, das mit einem Zentralrad in einer permanenten Formschlussverbindung steht. Werden das Verhältnis der wirksamen Radien des Satellitenrades und des Zentralrades und die gegenseitige exzentrische Lage des Satellitenrades und des Zentralrades zueinander durch geeignete Mittel variiert, wird in entsprechender Weise das Drehzahlverhältnis zwischen dem Antriebs- und dem Abtriebselement bestimmt. Die das Satellitenrad bildenden Räder durchlaufen bei exzentrischer Lage zu dem Zentralrad einen drehmomentübertragenden Lastweg und einen lastfreien Weg zyklisch, wobei die Räder einerseits um die Satellitenradachse und andererseits über eine richtungsgeschaltete Kupplung nur in eine Richtung um ihre eigene Achse drehbar angeordnet sind. Beim Übergang vom lastfreien Weg zum Lastbogenweg übertragen die Räder durch Formschlusseingriff bei blockierter Eigenrotation das jeweils anliegende Drehmoment. Eine Ungleichförmigkeit der Drehmomentübertragung wird durch Variation der durch den Lastbogen bestimmten Radien und/oder der wirksamen Tangentialkomponenten durch eine zyklische Regelung zumindest teilweise kompensiert. In einem konkreten Ausführungsbeispiel, das in dieser Druckschrift beschrieben wird, werden die Kupplungselemente auf dem Umfang des Antriebselementes angebracht und können auf der Abtriebsseite durch dort vorgesehene radiale Nuten unterschiedliche Laufradien einnehmen. Die Kupplungselemente werden dabei über verschiedene, richtungsgeschaltete Kraft- und/oder Formschlusswirkungen so in Eingriff gebracht, dass immer dasjenige Kupplungselement das Drehmoment übernimmt, das zur höchsten Winkelgeschwindigkeit im Abtriebselement führt.

In der EP 1 003 984 B1 wird eine Weiterbildung eines solchen Getriebes mit Satelliten bzw. Klemmelementen beschrieben, die aus einem ein- oder mehrteiligen Grundkörper und aus einem ein- oder mehrteiligen Kontaktkörper bestehen, der in der drehmomentübertragenden Stellung in der Führung des Antriebselementes sperrend anliegt, wobei vorstehende Klemmkörperzapfen oder ein mit dem Klemmkörper verbundenes Element zweischnittig, d.h. jeweils zwei axial versetzte Teile aufweisend, in radialen Führungen des Abtriebselementes angeordnet ist. Die Klemmelemente können nach einer weiteren dort beschriebenen Ausgestaltung auch Kontaktkörper mit einem unrunden Querschnitt aufweisen, wobei ein Flächenabschnitt der Kontaktkörper mit seinem Krümmungsradius etwa der Flächenkrümmung der Ringnutwandung der Ringscheibe angepasst ist, mit der die genannten Flächenabschnitte der Kontaktkörper in der drehmomentübertragenden Stellung eine reibschlüssige flächige Anlage bilden, so dass die Hertz'sche Pressung minimiert wird, wobei das Verhältnis der Radien zwischen 0,6 und 1,4 liegen soll.

Wichtig für die Funktion solcher Getriebe ist eine kompakt bauende, hochfrequent und schaltgenau kuppelbare, technische Lösung für das Funktionsprinzip der Satelliten- bzw. Kupplungselemente. Die Aufgabe der hochfrequenten Kupplung bzw. Entkupplung zeigt zwar gewisse Analogien zu denen sich bei Freiläufen stellenden Aufgaben, jedoch unterscheiden sich Freiläufe von den hier in Rede stehenden Getrieben erheblich. Während Freiläufe an jeder beliebigen Stelle mit allen oder möglichst vielen Kupplungselementen, wie Klemmkörpern oder Sperrklinken, möglichst schaltgenau verriegeln sollen, muss bei mit Klemmkörpern arbeitenden Getrieben (sogenannten Satellitengetrieben) die Verriegelung und Entriegelung immer an bestimmten Stellen, nämlich beim Eintritt in den sogenannten Lastbogenweg erfolgen, wobei stets nur ein einziges Kupplungselement im Eingriff sein darf, währenddessen die übrigen Kupplungselemente den sogenannten Leerbogen durchlaufen. Bei Satellitengetrieben ergeben sich außerdem erheblich höhere Anforderungen an die Kupplungselemente, welche jeweils einzeln die Kraft direkt von der Ringscheibe als Antriebsscheibe in die Sternscheibe als Abtriebsscheibe übertragen müssen, während bei Freiläufen die Krafteinleitung in einen Innen- oder Außenring, zwischen denen die Klemmkörper rotieren, regelmäßig über alle Klemmkörper erfolgen. Bei Getrieben ist die Anzahl der Kupplungsvorgänge sowie die Kraftüberleitung über jeweils ein einzelnes Kupplungselement auch höher.

Es ist daher Aufgabe der vorliegenden Erfindung, das eingangs genannte stufenlose Getriebe dahingehend weiterzuentwickeln bzw. zu verbessern, dass das Getriebe einfach und funktionssicher aufgebaut ist.

Diese Aufgabe wird durch das Getriebe nach Anspruch 1 gelöst.

Das erfindungsgemäße stufenlos regelbare Getriebe besitzt eine Ringscheibe mit einer Umfangsnut sowie Formschlusselemente, die vorzugsweise als ringförmiges Zahnprofil ausgebildet sind. In der genannten Umfangsnut werden Kupplungselemente geführt, welche Formschlusselemente aufweisen, die komplementär zu den Formschlusselementen der Ringscheibe ausgebildet sind, also insbesondere ein Zahnprofil aufweisen, das zum formschlüssigen Eingriff in die Verzahnung der Ringscheibe geeignet ist. Diese Kupplungselemente durchlaufen einen das anliegende Drehmoment übertragenden Lastbogen, der sich über einen Teilkreisbogen erstreckt, und einen Leerbogen. Beim Eintritt in den Lastbogen werden die Klemmelemente eingekuppelt, d.h., zwischen den Formschlusselementen der Ringscheibe und den korrespondierend ausgebildeten Formschlusselementen der Klemmkörper wird ein Formschlusseingriff hergestellt, indem die Kupplungselemente eine Verschwenkung um eine körpereigene Achse vollziehen, die vorzugsweise parallel zu den Drehachsen der Ringscheibe und der Sternscheibe des Getriebes steht. Dieser Formschlusseingriff bleibt im Lastbogen aufrechterhalten. Beim Übergang vom Lastbogen in den Leerbogen werden die Klemmkörper zurückgeschwenkt, wodurch der Formschlusseingriff gelöst wird. Jedes Kupplungselement besitzt einen axial hervorstehenden, in einer der vorgesehenen Radialführungen der Sternscheibe bewegbaren Übertragungsstift, über den die beim Durchlaufen des Lastbogens anliegende Kraft auf die Sternscheibe übertragen wird. Diese sogenannte einschnittige Kraftübertragung hat den Vorteil, dass der Aufbau des Getriebes einfach gehalten werden kann.

Je nach konzentrischer oder exzentrischer Lage der Sternscheibe zur Ringscheibe kann das Übersetzungsverhältnis verändert werden. Die Übertragungsstifte laufen bei Veränderung des Übersetzungsverhältnisses in Radialführungen, die nutenförmig sein können oder entlang radial verlaufender Flächen von verschwenkbaren Klemmbacken, die bei eingestelltem Übersetzungsverhältnis aufeinander zu und den Übertragungsstift in der gewünschten Lage fixierend verschwenkbar sind. Die genannten Radialführungen können linear oder auch leicht bogenförmig verlaufen.

Erfindungsgemäß wird die Geometrie der Kupplungselemente, der Umfangsnut und der Formschlusselemente der Ringscheibe sowie die Geometrie der Sternscheibe mit ihren Führungen und der Abstand der Ringscheibe zur Sternscheibe so gewählt, dass die Kräfte, die beim Durchlaufen des Lastbogens zwischen dem Kupplungselement und der Sternscheibe auftreten, einen Formschlusskontakt erzeugen oder verstärken, bei dem die Anpresskraft ein das Kupplungselement in planparalleler Stellung zu der Ringscheibe und der Sternscheibe haltendes Moment erzeugt, das größer ist als das Kippmoment, das durch den Abstand zwischen der Wirkungsebene der Kraftübertragung von der Ringscheibe in die Kupplungselemente einerseits und der Wirkungsebene der Kraftübertragung von den Kupplungselemente in die Sternscheibe andererseits bestimmt wird. Vorzugsweise besitzen die Formschlusselemente der Ringscheibe sowie die der Kupplungselemente möglichst viele Zähne auf dem Umfang, um die Schaltgenauigkeit zu erhöhen, die im günstigsten Fall nur so hoch sein kann wie die Zahnteilung. Bei gegebenem Umfang der Formschlusselemente der Ringscheibe werden die einzelnen Zähne um so kleiner, je mehr Zähne verwendet werden sollen. Kleine Zähne verfügen aber naturgemäß über kleine Kontaktflächen. Da die Flächenpressung der Zähne von der zulässigen Werkstoffbeanspruchung her begrenzt ist, werden unter Umständen die übertragbaren Drehmomente sehr gering. Aus diesem Grund besitzt jedes Kupplungselement im Unterschied zu Sperrklinken bei Freiläufen eine Kontaktfläche mit aus mehreren Zähnen bestehenden Formschlusselementen, wobei die Zähne in jeweils vorhandene Zähne der Formschlusselemente der Ringscheibe eingreifen. Zur Erhöhung der übertragbaren Umfangskraft werden die Klemmelemente so ausgeführt, dass die übertragenen Umfangskräfte im Kupplungselement ein Rotationsmoment M1 verursachen, das stets größer ist als das Rotationsmoment M2 aufgrund möglicher Zahnflankenkräfte, dass eine Entriegelung bewirken würde. Zusätzlich wird das übertragbare Drehmoment dadurch erhöht, dass die Reibung in den somit durch hohe Anpressung belasteten Kontaktflächen zu den Komponenten der Zahnkräfte in Umfangsrichtung wirken.

Bei der gewählten einschnittigen Kraftausleitung aus den Kupplungselementen in die Sternscheibe liegen die Wirkungslinien der einleitenden und der ausleitenden Kräfte in verschiedenen Ebenen mit einem Abstand le. Aufgrund der bestehenden Gleichgewichtsbedingung sind die einleitende Kraft Fₑᵢₙ und die ausleitende Kraft Fₐᵤₛ gleich groß und entgegengerichtet, d.h., sie erfüllen die Gleichung Fₑᵢₙ = -Fₐᵤₛ. Auf das Kupplungselement wirkt somit ein Kippmoment Mkipp = le x Faus, wodurch eine Rotation des Kupplungselementes aus der planparallelen Ebene zur Ringscheibe und zur Sternscheibe verursacht wird. Die Geometrie der Klemmkörper ist somit so zu wählen, dass das Rotationsmoment M1 = Fₑᵢₙ x le eine Anpresskraft in der Verzahnung auslöst, die zu einem Stabilisierungsmoment Mₛ führt, das größer ist als das Kippmoment Mₖᵢₚₚ.

Die vorbeschriebene Lösung ist für alle denkbaren und praktisch möglichen Lastfälle des Getriebes realisierbar, da bei der gewählten Geometrie des Getriebes alle Kräfte, die zu den obengenannten Momenten führen, proportional zum jeweils anliegenden Drehmoment sind. Jeweils wählbare geometrische Parameter sind insbesondere der Zahnflankenwinkel der Verzahnung, die Höhe der Verzahnung, die mechanisch wirksame Breite der Verzahnung, die mechanisch wirksame Länge des Übertragungsstiftes, der Krümmungsradius der Ringscheibe, der Durchmesser oder die Führungslänge der Gleitkontur des Klemmelementes in der Ringscheibe, das Spaltmaß zwischen Ring- und Sternscheibe, der wirksame Klemmwinkel der Klemmelemente sowie der Reibungskoeffizient in der Verzahnung. Die aufgabengemäß geforderte Stabilität des Getriebes kann also nur dann gewährleistet werden, wenn bei der Getriebeauslegung nicht nur die auftretenden Kräfte in der Ringscheiben- bzw. Sternscheibenebene berücksichtigt werden, sondern auch die hierzu senkrechten Kraftanteile bzw. die infolge der räumlichen Ausdehnung der Klemmelemente auftretenden Drehmomente bzw. Hebelwirkungen.

Vorzugsweise Ausführungsformen des Getriebes sind in den Unteransprüchen beschrieben.

So wird vorzugsweise die wirksame Breite der Formschlusselemente im eingekuppelten Zustand mindestens so groß gewählt wie die Summe der mechanisch wirksamen Längen des Übertragungsstiftes und dem Abstand, d.h. dem Spaltmaß zwischen der Ringscheibe und der Sternscheibe. Diese grundlegende Bedingung geht davon aus, dass die Kraftverteilung auf den jeweiligen Bezugsflächen auch bei realen Toleranzen einen im wesentlichen konstanten Verlauf in axialer Richtung besitzt und die Bauteile keine nennenswerten Elastizitäten aufweisen, wobei der stabilisierende Einfluss der Reibungskräfte auf den Flächenanteilen der Verzahnung, die planparallel zu den Umfangsflächen der Ringscheibe liegen, nicht berücksichtigt ist.

Vorzugsweise werden die Kontaktflächen in der Ringscheibe, die zur Führung der Kupplungselemente dienen und die Reibungskräfte bewirken, so ausgebildet und angeordnet, dass die Wirkungslinie der Resultierenden aller Reibungskräfte dann weiter (oder näher) vom Mittelpunkt der Ringscheibe entfernt ist als die Wirkungslinie der resultierenden Kraft zwischen dem Kupplungselement und der Sternscheibe, wenn die Wirkungslinie der Verzahnungskräfte ebenfalls weiter (oder näher) vom Mittelpunkt der Ringscheibe entfernt ist als die Wirkungslinie zwischen dem Kupplungselement und der Sternscheibe. Auch diese Maßnahme dient der Vermeidung von Kippungen des Klemmelementes in anderen Richtungen als der Schwenkrichtung beim Ein- und Auskuppeln.

In einer weiteren Ausführung werden die Kupplungselemente nicht bzw. nicht nur in einer Ringnut geführt, sondern stützen sich stattdessen bzw. zusätzlich direkt mit dem Übertragungsstift an der Anlaufscheibe in radialer Richtung ab bzw. auf dem Übertragungsstift wird eine Rolle aufgeschoben, die wiederum an der Anlaufscheibe anliegt. Zusätzlich ist in einer besonderen Variante eine Anlaufscheibe an der Ringscheibe angebracht, die unterhalb des Übertragungsstiftes liegt. In diesem Falle ragt der Übertragungsstift somit durch den Umfangsschlitz, den die beiden Anlaufscheiben offen lassen, aus dem Kupplungselement heraus in die Sternscheibe. In diesem Fall ist die Ringnut in der Ringscheibe nicht mehr zwingend erforderlich und kann entfallen. Der Vorteil dieser Lösung liegt nicht nur in dem verminderten Raumbedarf sondern auch in den geringeren Kippmomenten im Überholbetrieb, da die Führungskräfte im Kontakt mit der oder den Anlaufscheiben in einem sehr geringen Abstand zu den Führungskräften in der Sternscheibe wirken und so die Länge des mechanisch wirksamen Kipphebels minimiert ist.

Nach einer weiteren Ausgestaltung der Erfindung besitzen die Kupplungselemente eine Axialbohrung, die oberhalb und parallel zur Schwenkachse der Kupplungselemente angeordnet ist, und die eine Druckfeder aufnimmt, die sich einerseits an der Ringscheibe und mit dem anderen Ende an einer Anlaufscheibe gleitend abstützt, so dass das Kupplungselement axial geführt wird und gleichzeitig sichergestellt ist, dass alle oder zumindest die dominanten Reibungskräfte oberhalb des Übertragungsstiftes angreifen, so dass beim Richtungswechsel der angreifenden Umfangskraft jeweilige das Einkuppeln oder Auskuppeln unterstützende Momente erzeugt werden. Diese Druckfeder dient somit als elastische Stützung der Klemmelemente gegen ein seitliches Kippen im Überholbetrieb.

Nach einer Weiterbildung der Erfindung besitzt die Ringscheibe eine weitere parallel zur Fläche der Formschlusselemente liegende im wesentlichen glatte Ringfläche, an der sich eine Feder abstützt, deren anderes freies Ende auf das Kupplungselement federnd einwirkt, wobei der Winkel (α) zwischen der Verbindungslinie des Kontaktpunktes der Feder an der genannten Ringfläche und dem Kontaktpunkt der Feder an dem Kupplungselement einerseits und der durch den genannten Kontaktpunkt der Feder an dem Kupplungselement laufenden Radiallinie die Bedingung tan(α)≤my mit my = Reibungskoeffizient der Gleitführung der Feder (19) in der Ringfläche (18) erfüllt.

Um eine sichere Verriegelung der Kupplungselemente beim Übergang vom Leerbogen in den Lastbogen zu schaffen, muss das auf die Kupplungselemente wirkende Drehmoment größer sein als das sich aus dem Produkt der Reibung und dem Abstand a ergebende Drehmoment, wobei der Abstand a der Abstand ist, den das erste mit dem Formschlusselemente der Ringscheibe in Eingriff kommende Formschlusselement des Klemmelementes von der Klemmelementdrehachse hat.

Zur weiteren Optimierung der Funktionalität der Kupplungselemente liegt der Schwerpunkt aller Massen, die beim Einkuppeln der Kupplungselemente rotieren, im wesentlichen auf der Drehachse, um die das Kupplungselement beim Einkuppeln (bzw. Auskuppeln) rotiert.

Nach einer weiteren Ausgestaltung der Erfindung können die Formschlusselemente als Schrägverzahnungen ausgebildet sein. Die Passtoleranzen für die Führung der Kupplungselemente in der Umfangsnut der Ringscheibe und für die Führung des Übertragungsstiftes in den Radialführungen der Sternscheibe werden engstmöglich gewählt, um einerseits eine planparallele Position der Kupplungselemente sicherzustellen, andererseits jedoch Verkantungen mit Klemmwirkung und Selbsthemmung zu vermeiden.

Um eine optimale Stellgenauigkeit zu erreichen, besitzt der Übertragungsstift vorzugsweise einen Ring, der exzentrisch auf dem Übertragungsstift montiert ist. Die drehmomentführende Umfangskraft wird dann von der Ringscheibe in die Kupplungselemente eingebraucht, in dem der Ring bzw. die ringe in die Radialnuten der Sternscheibe in Umgangsrichtung mitgenommen werden, wobei sich die Ringe in den Radialnuten rollend (statt) gleitend bewegen. Entsprechendes gilt auch für über den Kopf der Übertragungsstifte montierte Hülsen, die eine Rollbewegung in den Radialnuten der Sternscheibe oder den Umfangsnuten der Ringscheibe ausführen. Die Umfangskraft an der Kontaktstelle zwischen der Radialnut der Sternscheibe und der genannten Hülse bewirkt wegen des exzentrischen Versatzes zwischen dem Übertragungspunkt einerseits und dem Ring mit der Hülse andererseits ein Rotationsmoment, das das Kupplungselement je nach Kraftrichtung in den Zahneingriff hinein- bzw. aus dem Zahneingriff herausdreht. Da der exzentrische Versatz beliebig kleingestaltet werden kann und der Abstand der Verzahnungsoberfläche auf dem Kupplungselement im Vergleich dazu viel größer sein kann, ist ein Hebelverhältnis möglich, bei dem kleine Relativbewegungen der Kontaktstelle in der Radialnut deutlich größere Bewegungen in der Verzahnung des Kupplungselementes auslösen. Der schädliche Totweg, der die geforderte bzw. gewünschte Stellgenauigkeit verschlechtert, wird somit beliebig klein; die Schaltgenauigkeit kann den Wert der Zahnteilung erreichen. Tatsächlich findet nach dem Einkuppeln bzw. Einrasten des Kupplungselementes keine Gleit- oder Wälzbewegung mehr in der Verzahnung statt, d.h. aller Vorhandenen Zähne tragen gemeinsam und gleichzeitig mit im wesentlichen gleichen Lastanteilen. Die Dimensionierung der Zahnfußbelastung hängt damit nicht mehr von der Größe der einzelnen Zähne, sondern nur noch von der Breite der Kupplungselemente ab.

Weiterbildungen der Erfindung werden anhand der Zeichnungen erläutert. Es zeigen
- Fig. 1: eine Explosionsdarstellung der Ringscheibe mit der Umfangsnut und einer Zahnscheibe, ein Klemmelement sowie eine Anlaufscheibe,
- Fig. 2: die vorgenannten Teile in einer transparenten Darstellung ohne den axialen Explosionsversatz,
- Fig. 3: eine Seiten-Transparentansicht der Ringscheibe und eines Kupplungselementes im Klemmzustand,
- Fig. 4: eine perspektivische Transparentansicht der Anordnung nach Fig. 2 oder 3 mit einer zusätzlichen Anfederung des Kupplungselementes,
- Fig. 5: eine Seitenansicht der Ausgestaltung nach Fig. 4,
- Fig. 6: eine perspektivische Ansicht gemäß Fig. 2 bis 3 mit einer zusätzlichen Sicherung der planparallelen Lage des Kupplungselementes,
- Fig. 7: eine Seitenansicht der Ausführungsform nach Fig. 6,
- Fig. 8: eine Transparentdarstellung eines Klemmelementes mit Übertragungsstift sowie einer Darstellung der hierauf beim Einkuppeln wirkenden Kräfte und Drehmomente und
- Fig. 9: eine schematische Seitenansicht eines Klemmelementes sowie eines Teiles der Ringscheibe sowie einer Darstellung der auftretenden Reibungskräfte.
- Fig. 10: eine perspektivische Darstellung eines Klemmelementes sowie eines Teiles der Ringscheibe mit einer Rolle 22 auf dem Übertragungsstift, der in Kontakt mit der Anlaufscheibe liegt.

Prinzipiell ist der Aufbau des Getriebes aus der EP 0 708 896 B1, der EP 1 003 984 B1 oder der DE 199 53 643 A1 bekannt.

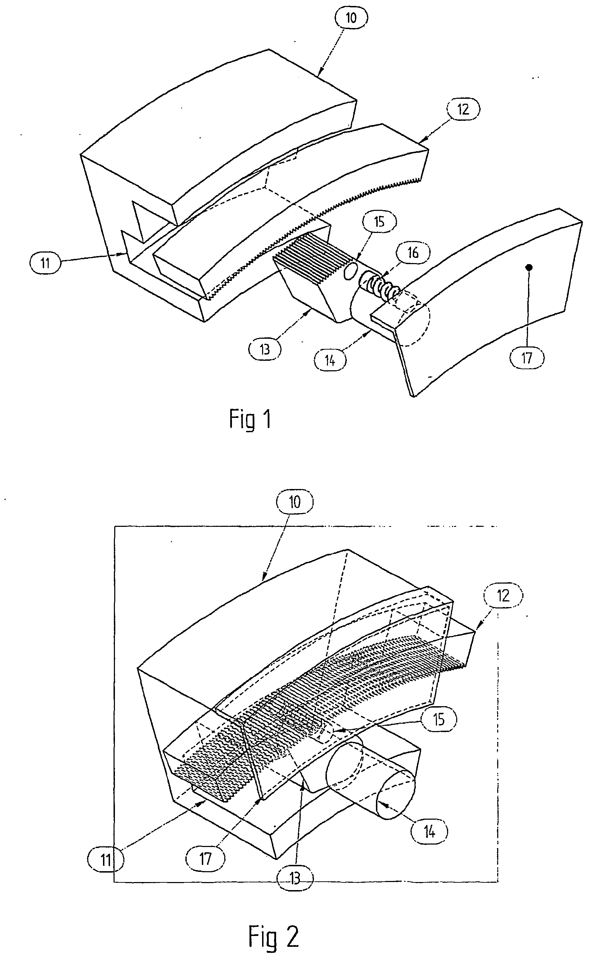

Das Satellitengetriebe besitzt eine Ringscheibe 10 mit einer Umfangsnut 11, in der Kupplungselement 14 als Klemmkörper zirkulierend bewegt werden. Diese Kupplungselemente durchlaufen bei der zirkularen Bewegung in der Umfangsnut einen Lastbogen sowie einen Leerbogen, wobei durch Verschwenkung der Kupplungselemente eine Anlage an die Umfangsnut geschaffen wird, die entweder, wie nach dem Stand der Technik im Prinzip bekannt, reibschlüssig oder, wie in Fig. 1 dargestellt, formschlüssig ist, so dass das anliegende Drehmoment auf die Sternscheibe übertragen werden kann. Hierzu besitzen die Kupplungselemente einen axial abstehenden Übertragungsstift 14, der - wie ebenfalls aus dem Stand der Technik bekannt - in Radialnuten einer Sternscheibe eingreift. Anstelle dieser Radialführungen in einer (nicht dargestellten) Sternscheibe können auch schwenkbare, auf der Sternscheibe angeordnete Klemmbacken verwendet werden, die beim Aufeinanderzuschwenken den Übertragungsstift fixieren und damit dessen Radiallage bezogen auf die Sternscheibe festlegen. Je nach Lage der Sternscheibe zur Ringscheibe, die konzentrisch oder exzentrisch sein kann, wird das Übersetzungsverhältnis variiert. Die Ringscheibe sowie die Sternscheibe sind parallel zueinander angeordnet.

Fig. 1 zeigt in einer Explosionsdarstellung axial versetzt ein Segment der Ringscheibe 10 mit der Umfangsnut 11 sowie Formschlusselementen 12, die im vorliegenden Fall als Zahnscheibe ausgebildet sind. Ein entsprechendes Zahnprofil besitzt das Klemmelement 13 an seiner der Zahnscheibe 12 zugewandten Fläche. Vorzugsweise werden mehrere parallel liegende Zahnreihen verwendet, die sich über eine axiale Breite erstrecken, die im dargestellten Fall größer ist als die Länge der Formschlusselemente des Kupplungselementes. Die dargestellte Anordnung nach Fig. 1 ist einschnittig, da die Kraftübertragung auf die Sternscheibe nur auf einer Seite, d.h. über den Übertragungsstift 14 erfolgt. Das Kupplungselement 13 besitzt eine Axialbohrung 15 zur Aufnahme einer Feder 16, die sich einerseits an der Ringscheibe und mit dem anderen Ende an der Anlaufscheibe 17 abstützt, so dass das Kupplungselement 13 axial geführt wird und gleichzeitig sichergestellt ist, dass alle oder zumindest die dominanten Reibungskräfte oberhalb des Übertragungsstiftes 14 angreifen, so dass beim Richtungswechsel der angreifenden Umfangskraft ein Einriegelungsmoment im Lastbogeneintritt und ein Entriegelungsmoment im Lastbogenaustritt erzeugt wird. Die Anordnung der genannten Teile in der zusammengesetzten Bauform ist im einzelnen Fig. 2 zu entnehmen.

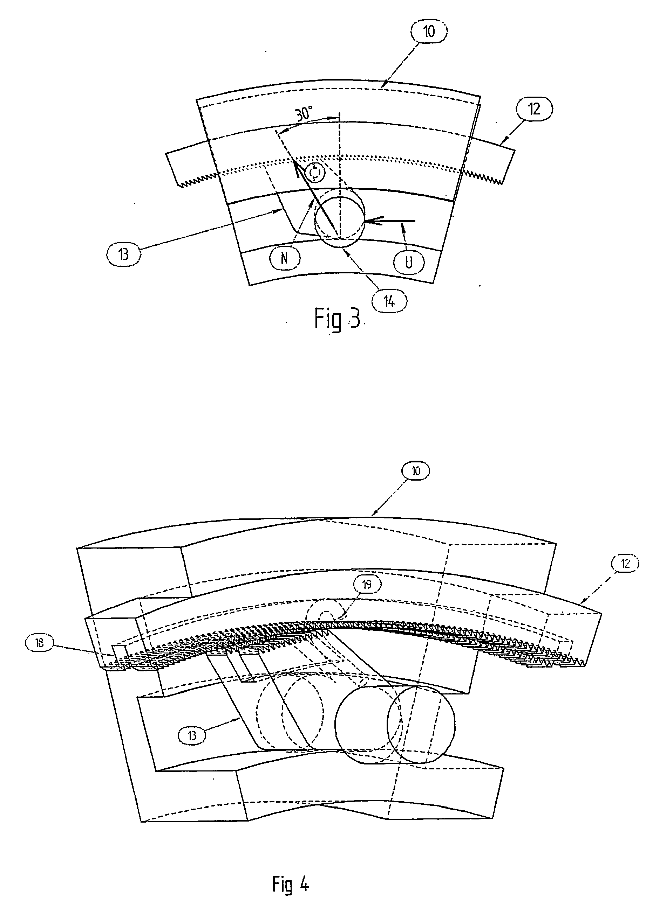

Fig. 3 zeigt in einer Seitenansicht die Stellung des Kupplungselementes 13 im eingeriegelten Zustand, bei dem die Zahnscheibe 12 mit der Verzahnung des Kupplungselementes 13 einen Formschluss bildet, der durch Verschwenkung des Kupplungselementes 13 bei Eintritt in den Lastbogen herbeigeführt wird. Durch Rückschwenken des Kupplungselementes 13 beim Austritt aus dem Lastbogen und beim Eintritt in den Leerbogen wird diese Kupplung wieder gelöst. In dieser drehmomentübertragenden Stellung (von der Ringscheibe 10 auf die nicht dargestellte Sternscheibe) greift am Übertragungsstift 14 des Kupplungselementes 13 eine Umfangskraft U an. Durch die geometrische Ausbildung des Kupplungselementes wirkt im vorliegenden Fall unter einem dargestellten Winkel von 30° in der Verzahnungsmitte eine Normalkraft N, mit der die Verzahnung des Kupplungselementes 13 in die Verzahnung des Zahnringes bzw. der Zahnscheibe 12 gedrückt wird und so die Übertragung hoher Umfangskräfte bei kleiner Zahngeometrie erlaubt, ohne dass die in Eingriff stehenden Formschlusselemente der Zahnscheibe 12 und des Kupplungselementes 13 "herausspringen". Im Bereich der steiler stehenden Zähne bei kleinerem Winkel als den dargestellten 30° wird diese Normalkraft noch weiter verstärkt.

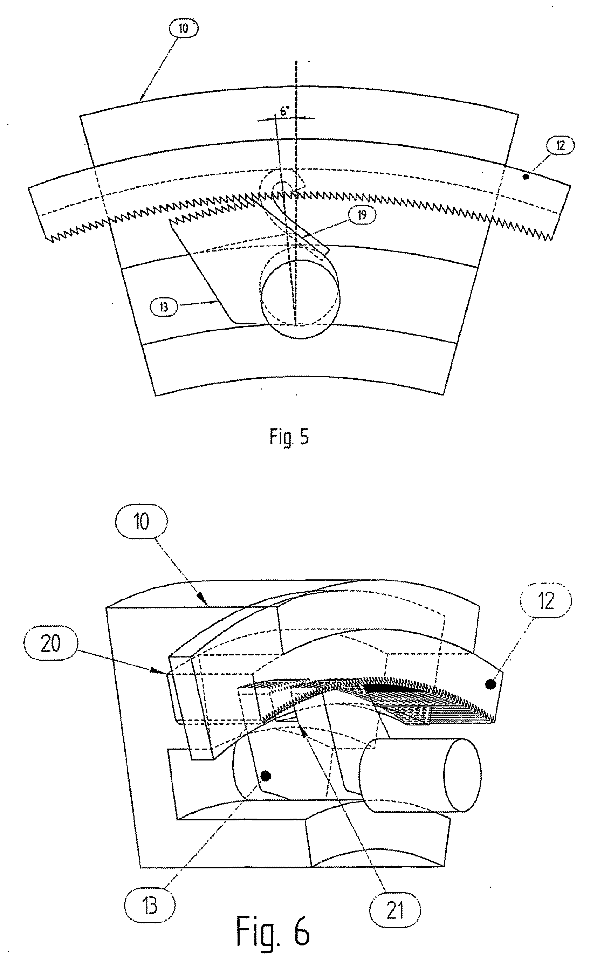

In einer weiteren Ausführungsvariante nach Fig. 4 ist inmitten der Zahnscheibe 12 eine Umfangsnut 18 vorgesehen, welche die Zahnscheibe 12 in zwei Zahnringe aufteilt. Eine entsprechend korrespondierende Aufteilung der Verzahnung besitzt das Kupplungselement 13. In diese Umfangsnut 18 greift eine Feder 19, im vorliegenden Fall eine Drahtfeder mit einem oben abgebogenen Ende ein, die mit ihrem anderen Ende an dem Klemmelement 13 fixiert ist. Die Feder 19 gleitet in der Umfangsnut 18 und wird hier abgestützt. Das Kupplungselement 13 und diese Anfederung 19 bewirken ein Kraftverhältnis, bei dem gemäß der Anordnung nach Fig. 5 der Kontaktpunkt der Feder 19 im Nutgrund 18 zusammen mit dem Kontaktpunkt des Klemmelementes 13 in der Umfangsnut der Ringscheibe 10 einen Winkel α bildet, der in der dargestellten Ausbildung 6 beträgt (wobei der andere Schenkel durch eine Radiallinie gebildet wird). Der Tangens des jeweiligen Winkels (hier 6°) soll erfindungsgemäß kleiner als das Verhältnis der Normalkraft N zu der Reibungskraft, d.h. kleiner als der Reibungskoeffizient my sein. Für 6° ergibt sich die Bedingung Tangens 6° = 0,11 < my. Damit werden die Kupplungselemente 13 mit nur einer Anfederung ohne externe Ansteuerung im Leerbogen aus der Formschlussverbindung (Verzahnung) gehoben und im Lastbogen automatisch in die Formschlussverbindung gedrückt.

Um einen Kupplungszustand zu vermeiden, bei dem die Verzahnung nur teilweise eingerastet ist, wird in einer weiteren Ausführung die Zahngeometrie, d.h. die Ausbildung der Formschlusselemente, so gewählt, dass die Summe der Momente, die durch Reibung beim Gleiten auf der Verzahnung erzeugt werden und die der Bewegung beim Einkuppeln durch Verschwenken des Kupplungselementes entgegenwirken, immer kleiner ist als die Momente, die eine Einkupplung bzw. Einriegelung bewirken.

Fig. 6 zeigt eine Ausführungsvariante des Getriebes, bei dem die planparallele Lage des Klemmelementes 13 dadurch gesichert wird, dass diese einen nutförmigen Schlitz 21 aufweist, in den eine Führungskontur 20 eingreift, welche aus der Zahnscheibe 12 mittig herausragt und die Zahnscheibe 12 in zwei axiale Zahnscheibenhälften unterteilt. In entsprechender Weise wie in Fig. 1 dargestellt, kann das Klemmelement 13 ebenfalls eine Bohrung zur Aufnahme einer Feder 16 aufweisen, die sich dann auf der einen Seite an der Führungskontur 20 (ggf. links und rechts) abstützt.

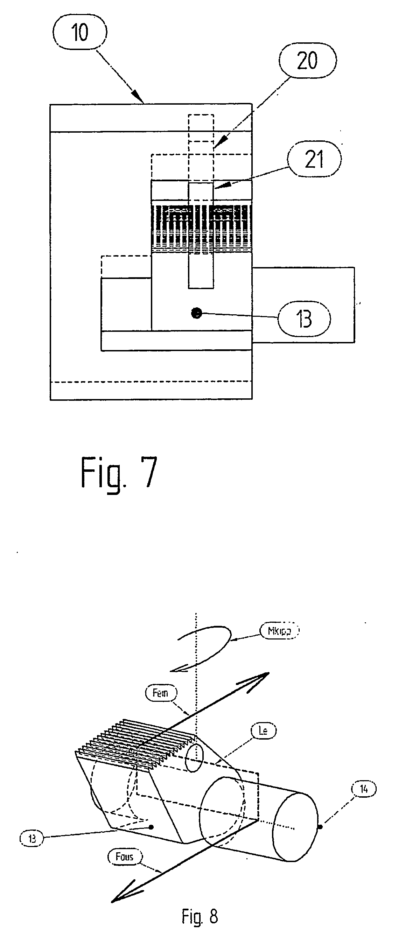

Wie Fig. 8 zu entnehmen ist, greifen in diametral entgegengesetzten Richtungen die Kräfte Fein einerseits und-Faus andererseits am Kupplungselement 13, im Idealfall mittig der Formschlusselemente sowie in der Mitte des Übertragungsstiftes 14 an. Die geforderte Gleichgewichtsbedingung ist unter der Annahme von engstmöglichen Passtoleranzen zu Null sowie der Bedingung, dass das Kupplungselement ein starrer Körper ist, dann erfüllt, wenn die Anpressung in die Verzahnung ein Kippen des Kupplungselementes trotz des Kippmomentes Mkipp verhindert.

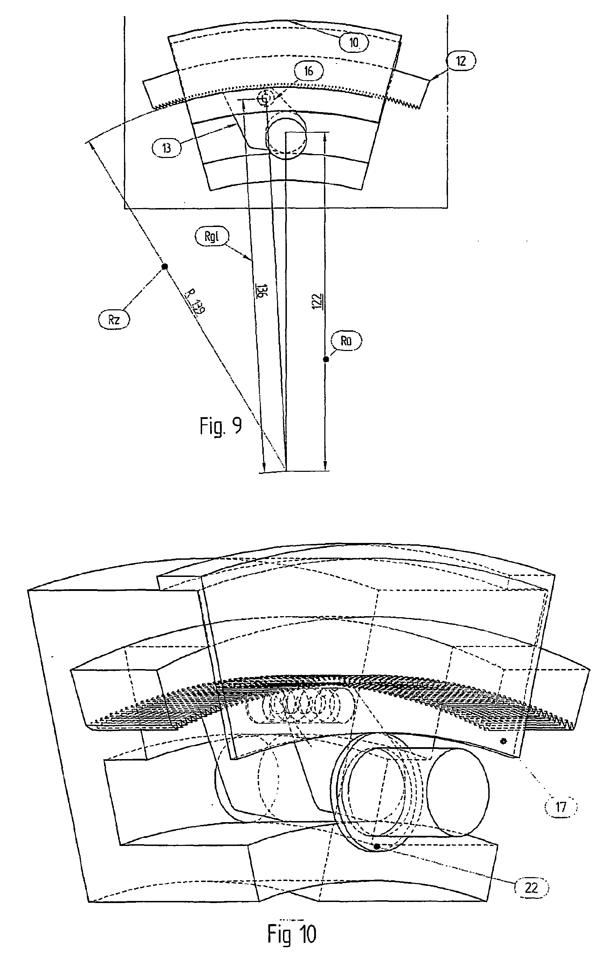

Der Darstellung nach Fig. 9 ist zu entnehmen, dass die Zahnscheibe 12 einen Radius Rz hat und dass der Übertragungsstift 14 mit seiner Drehachse auf einem Radius Rü umläuft. Die bereits zu Fig. 1 beschriebene axiale Anfederung 16 gleitet auf einem Radius Rgl, an dem die Reibungskräfte für die planparallele Führung des Klemmelementes 13 angreifen, die aus der Gleitbewegung des Klemmelementes resultiert. Positive Verriegelungsmomente ergeben sich durch Erfüllung der Bedingung R_{gl} > R_{ü}, wenn R_{z} > R_{ü} ist. Für eine nicht dargestellte Geometrie mit R_{z} > R_{ü} muss ebenfalls R_{gl} > R_{ü} sein.

Alle Bauelemente, die mit den Kupplungselementen 13 Überholvorgänge ausführen, werden einerseits in der Ringscheibe 10, in der Verzahnung 12 und in den Radialnuten der Sternscheibe geführt. Um diese Linearführungen möglichst verlustfrei zu gestalten, müssen die Passtoleranzen einerseits eng genug gewählt werden, um eine planparallele Position des Klemmelementes bzw. der Klemmelemente sicherzustellen, andererseits müssen Verkantungen mit Klemmwirkung und Selbsthemmung vermieden werden. Daher werden die Passungen erfindungsgemäß dergestalt festgelegt, dass im Überholbetrieb die Kupplungselemente 13 angefedert in der Ringscheibe so geführt sind, dass keine Klemmkontakte auftreten können, sondern statt dessen alle Kippmomente Mₖᵢₚₚ, die durch die einschnittige Kraftauslenkung verursacht werden, federgestützt gehalten werden. Die Federkennlinie und die Federvorspannung verhindern dabei alle Auslenkungen, die zu einem Anlaufen harter Konturen, insbesondere der ineinandergeschachtelten gewölbten Umfangskonturen und zum Verklemmen führen. Im eingekuppelten Zustand der Kupplungselemente 13 hingegen ist die stabilisierende Kraft aus dem Zahneingriff der Formschlusselemente dominant und hält sowohl den in der Umfangsnut geführten Klemmkörper als auch dessen Übertragungsstift in der Sternscheibe planparallel und frei von Verkantungen.

In einer weiteren Ausführungsform kann die Verzahnung als Schrägverzahnung vorgesehen sein, so dass das Klemmelement 13 im Zahneingriff in den Nutgrund der Umfangsnut der Ringscheibe 10 gedrückt wird und so eine Kippstabilisierung verstärkt wird.

Auf jedes Kupplungselement wirkt beim Betrieb eine Vielzahl von Kräften, wie z.B. Massenkräfte durch instationäre Phasen im Umlauf, Fliehkräfte, Korioliskräfte und Reibkräfte an den verschiedenen Kontaktflächen. Diese Kräfte liegen zum Teil auf verschiedenen Wirkungslinien und in verschiedenen Ebenen, so dass sie Momente bewirken, die den Rotationsvorgang der Kupplungselemente zum Einkuppeln und Entkuppeln und dessen planparallele Lage beeinflussen.

Beim Einsatz von Kupplungselementen in Freiläufen können die vorgenannten Kräfte positiv genutzt werden, weil die Kupplungsvorgänge an jeder Stelle des Umfanges und von allen Elementen gleichzeitig gewünscht und erforderlich sind. Damit können z.B. permanent im Betrieb wirkende Kräfte genutzt werden, um einen dauerhaften Kontakt von Sperrklinken oder Klemmkörpern zu Formtaschen oder Klemmringen zu halten. Außerdem ist es möglich, Federn anzubringen, die dauerhaft eine solche Kontakthaltung sicherstellen.

Bei den hier zu behandelnden erfindungsgemäßen Satellitengetrieben sind hingegen die genannten permanent über den gesamten Umfang wirkenden Kräfte und Momente Störfaktoren, da jeweils zur Drehmomentübertragung nur eines von mehreren Kupplungselementen eingekuppelt ist, während dessen die anderen Kupplungselemente im entkuppelten Zustand einen Leerbogen durchlaufen. Für eine einwandfreie und verschleißarme Funktion sind bei Satellitengetrieben nur solche Kräfte und Momente von Nutzen, durch die die Kupplungselemente im Gesamten Leerbogen aus der Verzahnung gehoben und im gesamten Lastbogen in die Verzahnung gepresst werden. Beim Übergang von einem Lastbogen in einen Leerbogen ändert sich jedoch die Richtung der auf den Übertragungsstift wirkenden Kraft, da der Übertragungsstift beim Durchlaufen des Lastbogens des Kupplungselementes die Kraft überträgt und beim Durchlaufen des Leerbogens durch die Sternscheibe lediglich mitgeschleppt oder getrieben wird. Um eine Rotation der Kupplungselemente zu bewirken, die zum Einkuppeln bzw. Auskuppeln führt, sind konsequenterweise nur solche Kräfte nutzbar, die zusammen mit der Kraft auf den Übertragungsstift ein Kräftepaar bilden, das beim Lastbogeneintritt zum Einkuppeln und beim Lastbogenaustritt zum Auskuppeln führt bzw. diese Bewegung unterstützt.

Zur erfindungsgemäßen Beseitigung der Störmomente werden die Kupplungselemente so balanciert, dass die Schwenkachse der Verriegelungsbewegung im Idealfall durch den Schwerpunkt aller beim Einriegeln bewegten Massen oder zumindest in dessen Nähe liegt. Zusätzlich werden alle Kontaktanlagen, die bei der Relativbewegung des Kupplungselementes zur Ringscheibe für die Führung benötigt werden oder geometrisch bzw. konstruktiv notwendig sind und die Reibungskräfte erzeugen, so gewählt, dass sie relativ zur Wirkungslinie der Kräfte auf dem Übertragungsstift positive Verriegelungsmomente erzeugen. Eine solche Bedingung wird u.a. durch Wahl der Radien gemäß Fig. 9 erzielt.

Eine weitere Maßnahme liefert die Anfederung 16, die einem seitlichen Verkippen des Kupplungselementes im Überholbetrieb elastisch entgegenwirkt, wobei eine weitgehend konstante (Reibungs-)Kraft erzeugt wird, die beim Einkuppeln und Auskuppeln die Schwenkbewegung der Kupplungselemente positiv unterstützt.

In derselben Weise wirkt auch die bereits beschriebene Anfederung 19 an der Umfangsfläche 18.

Wie aus Fig. 10 ersichtlich, ist vorzugsweise auf dem Übertragungsstift eine Rolle 22 montiert, die in Kontakt mit der Anlaufscheibe 17 liegt, so dass das Kupplungselement auf dem Umfang der Ringscheibe mit kleinstmöglicher Kipphebelwirkung geführt wird.

## Patentansprüche

1. Stufenlos regelbares Getriebe mit einer Formschlusselemente (12), vorzugsweise eine Verzahnung, sowie eine Umfangsnut (11) aufweisenden Ringscheibe (10) und einer hierzu in beliebige konzentrische oder exzentrische Lagen verschiebbaren Sternscheibe mit Radialführungen, und mit mindestens zwei Kupplungselementen (13), die einerseits in der Umfangsnut (11) geführt werden und die zu den Formschlusselementen (12) komplementär ausgebildete Formschlusselemente aufweisen und die andererseits einen axial hervorstehenden, in einer der vorgesehenen Radialführungen der Sternscheibe bewegbaren Übertragungsstift (14) aufweisen, wobei jedes Kupplungselement (13) bei seiner zirkularen Bewegung in der Umfangsnut (11) der Ringscheibe (10) einen sich über einen bestimmten Teilkreisbogen erstreckenden Lastweg, in dem das Kupplungselement (13) mit den Formschlusselementen (12) der Ringscheibe (10) im Eingriff steht, und den verbleibenden Teilkreisbogen als Leerbogen durchläuft, in dem der Formschlusseingriff gelöst (entkuppelt) ist, und wobei durch Variation der exzentrischen Lage der Ringscheibe und der Sternscheibe das Übersetzungsverhältnis veränderbar ist,
**dadurch gekennzeichnet,**
**dass** die Geometrie der Kupplungselemente (13), der Umfangsnut und der Formschlusselemente (12) der Ringscheibe sowie der Sternscheibe mit ihren Führungen und der Abstand der Ringscheibe zur Sternscheibe so gewählt werden, dass die beim Durchlaufen des Lastbogens zwischen dem Kupplungselement (13) und der Sternscheibe auftretenden Kräfte einen Formschlusskontakt erzeugen oder verstärken, bei dem die Anpresskraft ein das Kupplungselement (13) in planparalleler Stellung zu der Ringscheibe und der Sternscheibe haltendes Moment erzeugt, das größer ist als das Kippmoment, das durch den Abstand zwischen der Wirkungsebene der Kraftübertragung von der Ringscheibe in die Kupplungselemente einerseits und der Wirkungsebene der Kraftübertragung von den Kupplungselementen in die Sternscheibe andererseits bestimmt wird.

2. Getriebe nach Anspruch 1, **dadurch gekennzeichnet, dass** die wirksame Breite der Formschlusselemente im eingekuppelten Zustand mindestens so groß ist wie die Summe der mechanisch wirksamen Länge des Übertragungsstiftes und dem Abstand, d.h. dem Spaltmaß zwischen der Ringscheibe und der Sternscheibe.

3. Getriebe nach Anspruch 1 oder 2, **dadurch gekennzeichnet, dass** die Kontaktflächen in der Ringscheibe (10), die zur Führung der Kupplungselemente (13) dienen und die Reibungskräfte bewirken, so ausgebildet und angeordnet sind, dass die Wirkungslinie der Resultierenden aller Reibungskräfte dann weiter (bzw. näher) vom Mittelpunkt der Ringscheibe entfernt ist als die Wirkungslinie der resultierenden Kraft zwischen dem Kupplungselement und der Sternscheibe, wenn die Wirkungslinie der Verzahnungskräfte ebenfalls weiter (bzw. näher) vom Mittelpunkt der Ringscheibe entfernt ist als die Wirkungslinie zwischen dem Kupplungselement und der Sternscheibe.

4. Getriebe nach einem der Ansprüche 1 bis 3, **dadurch gekennzeichnet, dass** die Kupplungselemente eine Axialbohrung besitzen, die oberhalb und parallel zur Schwenkachse der Kupplungselemente sowie parallel und oberhalb der Übertragungsstift-Längsachse liegt und die eine Druckfeder (16) aufnimmt, die einerseits an einer Führungswand (17) (Anlaufscheibe) abgestützt ist, die planparallel zu den Ebenen der Ringscheibe und der Sternscheibe liegt und andererseits an einer hierzu parallelen Führungswand der Umfangsnut (11) oder dass eine sonstige Anfederung im Kupplungselement zwischen Führungswand und Umfangsnut wirkt.

5. Getriebe nach einem der Ansprüche 1 bis 4, **dadurch gekennzeichnet, dass** die Ringscheibe (10) eine weitere parallel zur Fläche der Formschlusselemente (12) liegende Ringfläche (18) aufweist, an der sich eine Feder (19) abstützt, deren anderes freies Ende auf das Kupplungselement federnd einwirkt, wobei der Winkel (α) zwischen der Verbindungslinie des Kontaktpunktes der Feder (19) an der Ringfläche (18) und dem Kontaktpunkt der Feder an dem Kupplungselement einerseits und der durch den genannten Kontaktpunkt der Feder an dem Kupplungselement laufenden Radiallinie andererseits die Bedingung tan(α)≤my mit my = Reibungskoeffizient der Gleitführung der Feder (19) in der Ringfläche (18) erfüllt und/oder dass die beim Übergang vom Leerbogen in den Lastbogen auftretenden Drehmomente der Kupplungselemente (13) größer sind als das sich aus dem Produkt der Reibung (R) und dem Abstand (a), den das erste mit dem Formschlusselement (12) der Ringscheibe in Eingriff kommende Formschlusselement des Klemmelementes (13) von der Klemmelementdrehachse hat, ergebende Drehmoment (Mr).

6. Getriebe nach einem der Ansprüche 1 bis 5, **dadurch gekennzeichnet, dass** die Anlaufscheibe (17) direkt oder über eine Rolle (22) indirekt mit dem Übertragungsstift (14) in Kontakt liegt, so dass das Kupplungselement (13) durch diesen Kontakt auf dem Umfang der Ringscheibe mit kleinstmöglicher Kipphebelwirkung geführt wird, wobei vorzugsweise eine zweite Anlaufscheibe auf dem inneren Radius angebracht wird und mit der Anlaufscheibe (17) zusammen einen Umfangsschlitz freilässt, durch den der Übertragungsstift (14) aus dem Kupplungselement herausragt und somit direkt oder über eine Rolle (22) indirekt die Führung des Stiftes (14) auf dem Umfang mit kleinstmöglicher Kipphebelwirkung gewährleistet wird.

7. Getriebe nach einem der Ansprüche 1 bis 6, **dadurch gekennzeichnet, dass** der Schwerpunkt aller Massen, die beim Einkuppeln der Kupplungselemente (13) rotieren, im wesentlichen auf der Drehachse liegt, um die das Kupplungselement beim Einkuppeln rotiert und/oder dass die Formschlusselemente (12) als Schrägverzahnungen ausgebildet sind.

8. Getriebe nach einem der Ansprüche 1 bis 7, **dadurch gekennzeichnet, dass** die Passtoleranzen für die Führung der Kupplungselemente (13) in der Umfangsnut (11) in der Ringscheibe (10) und des Übertragungsstiftes (14) in den Radialführungen der Sternscheibe engstmöglich gewählt werden und/oder dass das Kupplungselement eine die Formschlusselemente unterbrechende Nut aufweist, in der eine scheibenförmige Führung der Ringscheibe gleitend eingreift.

9. Getriebe nach einem der Ansprüche 1 bis 8, **dadurch gekennzeichnet, dass** ein Ring mit einer vorzugsweise runden Kontur exzentrisch auf dem Übertragungsstift (14) angebracht ist, so dass die Kraft, die von der Ringscheibe (10) auf diesen Ring ausgeübt wird, eine Rotation des Kupplungselementes (13) im wesentlichen um die Längsachse des Stiftes (15) auslöst, wobei vorzugsweise über die Ringe und/oder über den Kopf der Übertragungsstifte (14) Hülsen montiert sind, die statt einer Gleitbewegung in den Radialnuten der Sternscheibe und/oder in der Umfangsnut (11) eine Rollbewegung ausführen.

10. Getriebe nach Anspruch 9, **dadurch gekennzeichnet, dass** der Ring und/oder die Hülse und/oder der Übertragungsstift (14) einen Kragen aufweist bzw. aufweisen, der auch unter Last den Übertragungsstift (14) und das Kupplungselement planparallel zu der Ringscheibe (10) halten und/oder dass ein Führungselement, vorzugsweise einen Führungsstift, eine Luft- oder Schmiermittelführung oder ein Magnet, zur externen Steuerung der Bewegungen der Kupplungselemente vorgesehen ist.

## Claims

1. Continuously adjustable gear with an annular disk (10) having positive locking elements (12), preferably teeth, and a peripheral groove (11), and concentrically or eccentrically positionable relative thereto a star-shaped disk with radial guides, and with at least two coupling elements (13) that each ride at one end in the peripheral groove (11) and that have force-transmitting formations complementary to the positive locking elements (12) and that each at the other end have a force-transmitting pin (14) projecting axially into and shiftable in a respective one of the radial guides of star-shaped disk, whereby coupling element (13) moving on orbiting in the peripheral groove (11) of the annular disk (10) through a force-transmitting zone extending across a defined part of a circular arc in which the coupling element (13) is engaged with the positive locking elements (12) of the annular disk (10) and that in the remaining part of the circular arc is in a free-running zone in which it is diskonnected (decoupled) and where by varying the eccentricity of the star-shaped disk and annular ring the transmission ratio is changeable,
**characterized in that**
the geometry of the coupling elements (13), the groove and the positive locking elements (12) of the annular disk as well as the star-shaped disk with its guides and the spacing of the gear to the star-shaped disk are selected such that on moving through the force-transmitting zone the forces between the coupling element (13) and the star-shaped disk creating a torque holding the coupling element (13) parallel to the annular ring and the star-shaped disk and being greater than the tilting moment that is determined by the spacing between the effective plane of force transmission from the annular ring to the coupling elements on one side and the effective plane of the force transmission from the coupling elements to the star-shaped disk on the other side.

2. Gear according to claim 1, **characterized in that** the effective width of the positive locking elements when coupled is at least as big as the sum of the mechanically effective length of the force-transmitting pin and the spacing that is the gap between the annular disk and the star-shaped disk.

3. Gear according to claim 1 or 2, **characterized in that** contact surfaces in the annular disk (10) that serve to guide the coupling elements (13) and exert the frictional forces, are so shaped and oriented that the effective line of the resultant of all frictional forces is then further (or nearer) from the center of the annular disk than the effective line of the resulting force between the coupling element and the star-shaped disk when the effective line of the tooth forces is also further (or closer) from the center of the annular disk than the effective line between the coupling element and the star-shaped disk.

4. Gear according to one of claims 1 to 3, **characterized in that** the coupling elements each have an axial bore that is above and parallel to the pivot axis of the respective coupling element and parallel to and above the pin and that holds a compression spring (16) that bears at one side on a guide wall (17) (run-on disk), that extends parallel to the plane of the annular disk, and of the star-shaped disk, and that on the other end bears on a nearly parallel guide wall of the peripheral groove (11) or that there is such a spring in the coupling element between the guide wall and the peripheral groove.

5. Gear according to one of claims 1 to 4, **characterized in that** the annular disk (10) has another ring surface (18) parallel to a surface of the positive locking elements (12), a spring (19) having one end bearing on it and another free end bearing elastically on the coupling element, whereby an angle (α) between the connecting line of the contact point of the spring (19) on the ring surface (18) and the contact point of the spring on the coupling element on the one hand and the radial line through the contact point of the spring on the coupling element on the other hand complying with the formula tan (α) ≤ my, where my is the coefficient of sliding friction of the guide of the spring (19) in the ring surface (18) and/or that the torque of the coupling elements (13) is greater when moving from the free-running zone into the force transmitting zone than torque (Mr) resulting from the product of the friction (R) and the spacing (a) between the first force-transmitting element of the coupling element (13) coming into engagement with the force positive locking element (12) of the annular disk from the wedge-element axis.

6. Gear according to one of claims 1 to 5, **characterized in that** the run-on disk (17) bears directly or via a roller (22) indirectly with the force-transmitting pin (11) so that the coupling element (13) is guided by this contact on the rim of the annular disk with the least possible tilting effect, whereby preferably a second run-on disk is set on the inner radius and forms with the first run-on disk (17) an annular slot through which the force-transmitting pin (14) projects out of the coupling element and thus directly or via a roller (29) indirectly serves for guiding the pin (14) on the periphery with the smallest possible tilting action.

7. Gear according to one of claims 1 to 6, **characterized in that** the center of all masses that rotate on coupling of the coupling element (13) lies generally on the pivot axis about which the coupling element rotates when coupling and/or that the positive locking elements (12) are formed with angled teeth.

8. Gear according to one of claims 1 to 7, **characterized in that** the fit of the coupling elements (13) in the peripheral groove (11) of the annular disk (10) and of the force-transmitting pin (14) in the radial guides of the star-shaped disk is as tight as possible and/or that the coupling element has a groove in the positive locking elements in which a disk-shaped guide of the annular disk can slide.

9. Gear according to one of claims 1 to 8, **characterized in that** a ring is employed with a preferably round shape eccentric to the force-transmitting pin (14) so that the force that is exerted by the annular disk (10) on this ring produces a rotation of the coupling element (13) substantially about the longitudinal axis of the pin (14), whereby preferably sleeves are mounted on the rings and/or over the end of the force-transmitting pins (14) that roll instead of slide in the radial grooves of the star-shaped disk and/or in the peripheral groove (11).

10. Gear according to claim 9, **characterized in that** the ring and/or the sleeve and/or the force transmitting pin (14) have a collar that even when loaded holds the force-transmitting pin (14) and the coupling element parallel to the annular disk (10) and/or that a guide element, preferably a guide pin, an air or liquid guide or a magnet for externally controlling the movements of the coupling elements is provided.

## Revendications

1. Engrenage réglable de façon continue avec un disque annulaire (10) présentant des éléments à engagement positif (12), de préférence une denture, et une rainure circonférentielle (11), ainsi qu'avec un disque en étoile à guides radiaux qui peut être déplacé dans des positions quelconques concentriques ou excentriques par rapport à cela, et avec au moins deux éléments d'accouplement (13) qui, d'un côté, sont guidés dans ladite rainure circonférentielle (11) et présentent des éléments à engagement positif réalisés de façon complémentaire aux éléments à engagement positif (12), et qui, de l'autre côté, présentent une goupille de transmission (14) laquelle fait saillie axialement et peut être déplacée dans l'un des guides radiaux prévus du disque en étoile, chacun des éléments d'accouplement (13) - lors de son mouvement circulaire dans la rainure circonférentielle (11) du disque annulaire (10) - parcourant un trajet de charge qui s'étend sur un arc de cercle partiel déterminé et dans lequel l'élément d'accouplement (13) se trouve en prise avec les éléments à engagement positif (12) du disque annulaire (10), et parcourant le reste de l'arc de cercle partiel comme arc à vide dans lequel il est hors prise (désaccouplé), et le rapport de transmission pouvant être modifié en variant la position excentrique du disque annulaire et du disque en étoile,
**caractérisé par le fait que**
la géométrie des éléments d'accouplement (13), de la rainure circonférentielle et des éléments à engagement positif (12) du disque annulaire ainsi que du disque en étoile avec ses guides et la distance entre le disque annulaire et le disque en étoile sont choisies de telle manière que les forces se présentant, en parcourant l'arc de charge, entre l'élément d'accouplement (13) et le disque en étoile génèrent ou renforcent un contact à engagement positif dans lequel la force de pression génère un couple qui tient l'élément d'accouplement (13) en position plane parallèle par rapport au disque annulaire et au disque en étoile, ledit couple étant plus important que le couple de basculement qui est déterminé par la distance entre le plan d'action de la transmission de force depuis le disque annulaire aux éléments d'accouplement d'un côté et le plan d'action de la transmission de force depuis les éléments d'accouplement au disque en étoile de l'autre côté.

2. Engrenage selon la revendication 1, **caractérisé par le fait que** la largeur effective des éléments à engagement positif en état accouplé est au moins aussi grande que la somme de la longueur mécaniquement effective de la goupille de transmission et de la distance, c'est-à-dire la mesure de la fente entre le disque annulaire et le disque en étoile.

3. Engrenage selon la revendication 1 ou 2, **caractérisé par le fait que** les surfaces de contact dans le disque annulaire (10), qui servent à guider les éléments d'accouplement (13) et provoquent les forces de friction sont réalisées et disposées de manière à ce que la ligne d'action de la force résultante de toutes les forces de friction soit située donc plus loin (ou bien plus près) du centre du disque annulaire que la ligne d'action de la force résultante entre l'élément d'accouplement et le disque en étoile, lorsque la ligne d'action des forces d'engrenage est située, elle aussi, plus loin (ou bien plus près) du centre du disque annulaire que la ligne d'action entre l'élément d'accouplement et le disque en étoile.

4. Engrenage selon l'une des revendications 1 à 3, **caractérisé par le fait que** les éléments d'accouplement possèdent un trou axial qui est situé au-dessus de et parallèlement à l'axe de pivotement des éléments d'accouplement ainsi que parallèlement à et au-dessus de l'axe longitudinal de la goupille de transmission et qui reçoit un ressort à pression (16) qui est appuyé, d'un côté, sur une paroi de guidage (17) (disque de butée) laquelle est située de façon plane parallèle aux plans du disque annulaire et du disque en étoile, et, de l'autre côté, sur une paroi de guidage de la rainure circonférentielle (11), qui est parallèle à cette première, ou qu'un autre dispositif faisant ressort situé dans l'élément d'accouplement agit entre la paroi de guidage et la rainure circonférentielle.

5. Engrenage selon l'une des revendications 1 à 4, **caractérisé par le fait que** ledit disque annulaire (10) présente une autre face annulaire (18) qui est située parallèlement à la face des éléments à engagement positif (12) et sur laquelle s'appuie un ressort (19) dont l'autre extrémité libre agit élastiquement sur l'élément d'accouplement, l'angle (α) entre la ligne de jonction du point de contact du ressort (19) sur la face annulaire (18) et le point de contact du ressort sur l'élément d'accouplement d'un côté et la ligne radiale de l'autre côté qui passe par ledit point de contact du ressort sur l'élément d'accouplement vérifiant la condition tan(α)≤my où my étant le coefficient de friction du guidage à glissement du ressort (19) dans la face annulaire (18), et/ou que les couples des éléments d'accouplement (13) produits lors du passage de l'arc à vide à l'arc de charge sont plus grands que le couple (Mr) résultant du produit de la friction (R) et de la distance (a) qui existe entre le premier élément à engagement positif de l'élément de serrage (13) venant en prise avec l'élément à engagement positif (12) du disque annulaire, et l'axe de rotation de l'élément de serrage.

6. Engrenage selon l'une des revendications 1 à 5, **caractérisé par le fait que** le disque de butée (17) est directement ou, via un rouleau (22), indirectement en contact avec la goupille de transmission (14) de sorte que l'élément d'accouplement (13) est guidé, par ce contact, sur la circonférence du disque annulaire avec un effet de levier basculant le plus faible possible, de préférence un deuxième disque de butée étant monté sur le rayon intérieur et laissant libre, conjointement avec le disque de butée (17), une fente périphérique par laquelle la goupille de transmission (14) fait saillie hors de l'élément d'accouplement assurant ainsi directement ou, via un rouleau (22), indirectement le guidage de ladite goupille (14) sur la circonférence avec un effet de levier basculant le plus faible possible.

7. Engrenage selon l'une des revendications 1 à 6, **caractérisé par le fait que** le centre de gravité de toutes les masses qui tournent lors de l'accouplement des éléments d'accouplement (13) est situé pour l'essentiel sur l'axe de rotation autour duquel tourne l'élément d'accouplement lors de l'accouplement, et/ou que les éléments à engagement positif (12) sont réalisés en tant que dentures hélicoïdales.

8. Engrenage selon l'une des revendications 1 à 7, **caractérisé par le fait que** les tolérances d'ajustement pour le guidage des éléments d'accouplement (13) dans la rainure circonférentielle (11) dans le disque annulaire (10) et de la goupille de transmission (14) dans les guides radiaux du disque en étoile sont choisies de manière à être aussi étroites que possibles, et/ou que l'élément d'accouplement présente une rainure qui interromp les éléments à engagement positif et dans laquelle engrène à glissement un guide en forme de disque du disque annulaire.

9. Engrenage selon l'une des revendications 1 à 8, **caractérisé par le fait qu'**un anneau ayant de préférence un contour rond est monté excentriquement sur la goupille de transmission (14), de sorte que la force qui est exercée par le disque annulaire (10) sur cet anneau déclenche une rotation de l'élément d'accouplement (13) pour l'essentiel autour de l'axe longitudinal de la goupille (14), de préférence des douilles sont montées sur les anneaux et/ou sur la tête des goupilles de transmission (14), qui, au lieu d'un mouvement glissant, exercent un mouvement roulant dans les rainures radiales du disque en étoile et/ou dans la rainure circonférentielle (11).

10. Engrenage selon la revendication 9, **caractérisé par le fait que** ledit anneau et/ou la douille et/ou la goupille de transmission (14) présente ou bien présentent une collerette qui, même sous charge, tient la goupille de transmission (14) et l'élément d'accouplement de façon plane parallèle au disque annulaire (10), et/ou que l'on prévoit un élément de guidage, de préférence une broche de guidage, un guide d'air ou de lubrifiant ou un aimant pour la commande externe des mouvements des éléments d'accouplement.
